# EUROPÄISCHE PATENTANMELDUNG

(11) **EP 0 814 035 A1**
(43) Veröffentlichungstag der Anmeldung: **29.12.1997**
(21) Anmeldenummer: 97107949.6
(22) Anmeldetag: 15.05.1997
(51) Int. Cl.: B65G 17/32, B65G 17/42

(54) **Fördereinrichtung**

(30) Priorität: 18.06.1996 DE 29610702 U
(71) Anmelder: JOH. WINKLHOFER & SÖHNE GmbH & Co KG, D-81369 München (DE)
(72) Erfinder: Dag, Heinrich, 82377 Penzberg (DE); Winklhofer, Gerhard, Dipl.-Ing., 81369 München (DE)
(74) Vertreter: Grünecker, Kinkeldey, Stockmair & Schwanhäusser Anwaltssozietät

(57) **Zusammenfassung**

Die Erfindung bezieht sich auf eine Fördereinrichtung (1) mit einer Förderkette (2) und wenigstens einem Tragarm (3) zum Aufstecken zu fördernder Gegenstände, wobei der Tragarm (3) mit einem seiner Enden (14) über eine Überlastsicherung (17) mit der Förderkette (2) verbunden ist, wobei die Überlastsicherung (17) ein Kippgelenk (12-15) zwischen dem Tragarm (3) und der Förderkette (2) umfaßt, das bei einer vorbestimmten Belastung ein reversibles Verkippen des Tragarms (3) relativ zur Förderkette (2) gestattet. Eine solche Fördereinrichtung (1) soll vereinfacht ausgeführt werden. Dieses wird dadurch erreicht, daß das Kippgelenk (12-15) durch eine Zugfeder (17) belastet ist.

## Beschreibung

Die Erfindung bezieht sich auf eine Fördereinrichtung der im Oberbegriff des Anspruchs 1 erläuterten Art.

Eine solche Fördereinrichtung mit einer Förderkette und einem kippbaren Stift ist aus der US-A-4 533 039 bekannt. Der Stift umfaßt einen an der Kette befestigten Sockel. Der hülsenförmige Hauptkörper des Stiftes ist über ein Drahtseilstück mit dem Sockel verbunden. Damit ein Kippen des Stiftes stattfinden kann, ist die Befestigungsstelle des Drahtseilstückes innerhalb des Hauptkörpers gegenüber der Spannkraft einer Druckfeder verschiebbar angeordnet, wobei sich die Druckfeder an der verschiebbaren Befestigungsstelle und einem am Hauptkörper befestigten Stopfen, durch den das Drahtseilstück geführt ist, abstützt. Diese Konstruktion ist relativ kompliziert aufgebaut und daher teuer.

Eine weitere Fördereinrichtung ist aus dem DE-GM 93 14 261 bekannt. Die bekannte Fördereinrichtung dient zum Transport von Dosen oder anderen Hohlkörpern, wobei die Dosen einzeln auf jeweils einen Tragarm aufgesteckt sind, der quer zur Förderrichtung und horizontal liegend mit einem seiner Enden an der Förderkette befestigt ist. Das andere Ende des als Stab ausgebildeten Tragarms ist frei und erstreckt sich über eine mindestens der Dosenlänge entsprechende Länge frei von der Förderkette weg. Dadurch ist nicht zu vermeiden, daß der Tragarm, insbesondere bei höheren Geschwindigkeiten der Förderkette, in Schwingungen gerät, wobei durch den durch den Tragarm gebildeten, relativ langen Hebelarm die Gefahr besteht, daß auch die Förderkette in Mitleidenschaft gezogen wird. Um dies zu verhindern, wurde der bekannte Tragarm über eine Dämpfungseinrichtung mit der Kette verbunden, die Schwingungen absorbieren kann. Da die Dämpfungseinrichtung zwar in der Lage ist, die Schwingungen während des normalen Betriebs aufzunehmen, jedoch nicht geeignet ist, größere Belastungen am Tragarm abzufangen und von der Kette fernzuhalten, ist bei der bekannten Fördereinrichtung eine Überlastsicherung in Form einer Sollbruchstelle vorgesehen, die am Tragarm knapp neben seiner Befestigung an der Förderkette angeordnet ist. Die Sollbruchstelle soll sicherstellen, daß der Tragarm abbricht, ohne daß die Förderkette stärker in Mitleidenschaft gezogen wird, wenn auf den Tragarm eine übermäßige Kraft einwirkt. Bei Verwendung einer Sollbruchstelle darf eine vorbestimmte Belastung, die vermieden werden soll, um Beschädigungen der Förderkette zu vermeiden, einerseits nicht zu gering gewählt werden, um den ordnungsgemäßen Betrieb der Förderkette nicht zu oft und zu nachhaltig zu stören. Andererseits darf natürlich die vorbestimmte Kraft auch nicht zu hoch sein, damit die Überlastsicherung ihre Aufgabe, die Förderkette gegen Beschädigung zu schützen, sicher erfüllen kann. Mit einer Sollbruchstelle ist die vorbestimmte Belastung sehr schwierig zu steuern. Insbesondere ist es mit einer Sollbruchstelle schwierig, an sich geringfügige Belastungen, die aber häufig wiederkehren und dann zur Beschädigung der Förderkette führen, auszuschalten.

Der Erfindung liegt somit die Aufgabe zugrunde, eine Fördereinrichtung mit einer vereinfachten Überlastsicherung auszustatten.

Die Aufgabe wird durch die im Anspruch 1 angegebenen Merkmale gelöst.

Durch das erfindungsgemäß vorgesehene Kippgelenk kann der Tragarm unter einer vorbestimmten Belastung ausweichen, und nach dem Ende der Belastung wieder in seine ursprüngliche Förderlage zurückkehren, so daß die vorbestimmte Belastung relativ niedrig angesetzt werden kann, ohne daß der Tragarm zerstört und nachfolgende Reparaturarbeiten notwendig sind. Auf diese Weise wird die Belastung der Förderkette und somit die Gefahr, daß diese beschädigt wird, entscheidend verringert. Die angegebene Federbelastung stellt eine konstruktiv einfache und zweckmäßige Möglichkeit dar, die vorbestimmte Belastung, bei der ein Kippen erstmalig stattfindet, einzustellen. Dabei kann die Zugfeder zweckmäßig zwischen der Förderkette und dem Tragarm gespannt sein.

Durch die Ausgestaltung nach Anspruch 2 wird sichergestellt, daß die Förderkette geschützt wird, egal aus welcher Richtung die Belastung auf den Tragarm einwirkt.

Anspruch 3 beschreibt eine besonders bevorzugte konstruktive Ausgestaltung des Kippgelenkes.

Durch die Ausgestaltung nach Anspruch 4 wird das Verkippen wesentlich erleichtert.

Die Ausgestaltung nach Anspruch 5 stellt sicher, daß der Tragarm nach dem Verkippen wieder in seine korrekte Förderposition zurückkehrt.

Anspruch 6 beschreibt eine besonders bevorzugte geometrische Form des Zentrierkörpers, die eine gute Zentrierwirkung aufweist und gleichzeitig das Verkippen nicht behindert.

Der Tragarm kann gemäß Anspruch 14 in üblicher Weise über einen Adapterstift, der gleichzeitig Teil der Kette ist, mit der Förderkette verbunden werden.

Durch die erfindungsgemäße Verbindung zwischen dem Tragarm und der Förderkette über ein Kippgelenk kann der den Tragarm befestigende Adapterstift gemäß Anspruch 15 in einfacher Weise über einen üblichen Sprengring, einen Splint und einer andere bekannte Lagesicherung an der Förderkette befestigt werden.

Zweckmäßigerweise ist auch der den kippbaren Tragarm der vorliegenden Erfindung befestigende Adapterstift gemäß Anspruch 16 mit einer Dämpfungseinrichtung mit der Förderkette verbunden.

Ein Ausführungsbeispiel der Erfindung wird nachfolgend anhand der Zeichnungen näher erläutert. Es zeigen:
- Fig. 1: einen Schnitt durch einen Teil einer erfindungsgemäß mit kippbaren Tragarmen ausgestatteten Fördereinrichtung, und
- Fig. 2: die Darstellung gemäß Fig. 1 mit verkipptem Tragarm.

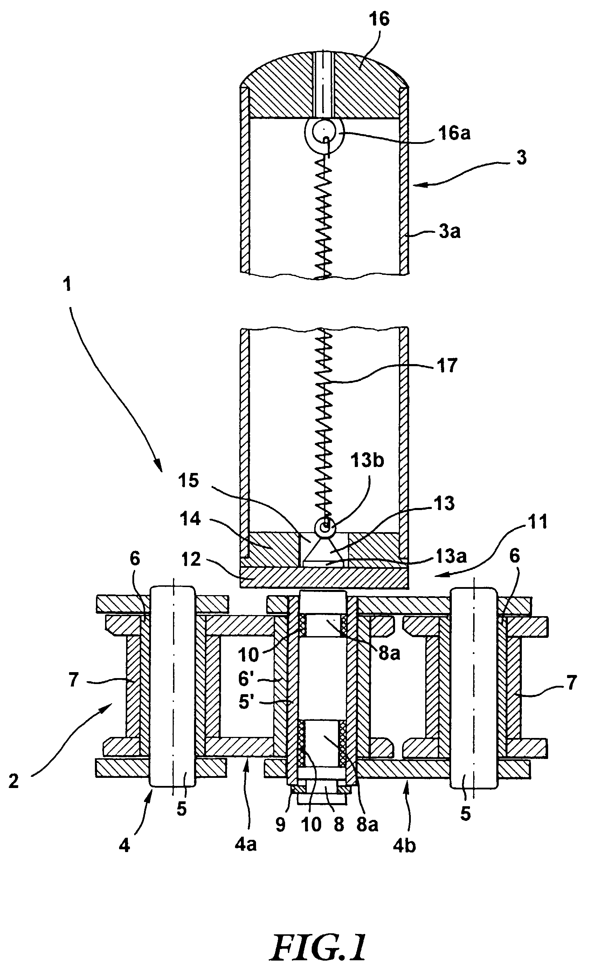

Fig. 1 zeigt eine erfindungsgemäße Fördereinrichtung 1, die eine Förderkette 2 und eine Vielzahl von Tragarmen 3 umfaßt, die mit vorbestimmtem Abstand, d.h. vorbestimmter Teilung, an der Kette 2 befestigt sind. Der in den Fig. dargestellte Ausschnitt umfaßt lediglich einen kleinen Bereich der Kette 2 und nur einen Tragarm 3.

Die Kette 2 ist als Gelenkkette ausgebildet und enthält, wie bei derartigen Ketten üblich, einen Vielzahl von Kettengliedern 4, die als Innenlaschen 4a und Außenlaschen 4b ausgebildet sind und jeweils über Gelenkbolzen 5 zumindest in einer Ebene verschwenkbar miteinander verbunden sind. Die Verbindung erfolgt über Hohlbolzen 6, die mit den Innenlaschen 4a fest verbunden sind. In den Hohlbolzen 6 sind jeweils die Gelenkbolzen 5 drehbar aufgenommen, die ihrerseits mit den Außenlaschen 4b fest verbunden sind. Auf diese Weise können sich Innen- und Außenlaschen 4a, 4b relativ zueinander um die Mittelachse der Bolzen 5 verschwenken. Auf den Hohlbolzen 6 sind jeweils Rollen 7 drehbar gelagert, die die Reibung an den nicht gezeichneten Antriebsrädern verringern.

Zum Befestigen des Tragarms 3 wird in einem durch die Teilung bestimmten Abstand jeweils der Gelenkbolzen 5 durch einen weiteren Hohlbolzen 5' ersetzt, der in einem durchmesservergrößerten Hohlbolzen 6' (mit der Innenlasche 4a verpreßt) läuft. Die freilaufende Rolle 7 entfällt, dafür ist der äußere Durchmesser des Hohlbolzens 6' gleich dem Außendurchmesser der Rollen 7.

Im Inneren des Gelenkhohlbolzens 5' ist ein Adapterstift 8 aufgenommen, der sich beidseitig aus dem Gelenk-Hohlbolzen 5' erstreckt. An der dem Tragarm 3 abgewandten Seite ist der Adapterstift 8 durch einen herkömmlichen Sprengring 9, der in eine Nut am Adapterstift 8 eingeschnappt ist und gegen eine über die Außenlasche 4b vorstehende Stirnfläche des Gelenk-Hohlbolzens 5' anschlägt, gegen axiale Verschiebung gesichert. Der Adapterstift 8 ist an seiner sich innerhalb des Gelenk-Hohlbolzens 5' befindenden axialen Länge mit zwei zueinander in axialer Richtung beabstandeten Umfangsnuten 8a versehen, in denen jeweils eine Dämpfungeinrichtung 10 untergebracht ist. Jede Dämpfungseinrichtung 10 besteht aus einem in der Breite der Nut 8a abgeschnittenen Schlauchstück aus einem Gummischlauch oder einem Elastomerschlauch, und ist in Radialrichtung vorgespannt in der jeweiligen Nut 8a schwingungsübertragend angeordnet.

An der dem Sprengring 9 gegenüberliegenden Seite, neben der Kette 2, ist der Tragarm 3 über ein Kippgelenk 11 am Adapterstift 8 angeordnet. Das Kippgelenk 11 enthält eine Sitzplatte 12, die am Adapterstift befestigt ist. Die Sitzplatte 12 ist scheibenförmig und hat einen mit dem Umfang des Tragarms 3 fluchtenden Umfang. Auf der Sitzplatte 12 ist ein kegelförmiger Zentrierkörper 13 mittig befestigt. Der Zentrierkörper 13 weist einen im wesentlichen zylindrischen Fuß 13a und eine an seiner Spitze befestigte Öse 13b auf.

Der Tragarm 3 ist als zylindrischer Hohlkörper mit einer rohrförmigen Wandung 3a ausgebildet. Am der Sitzplatte 12 zugewandten Ende ist die rohrförmige Wandung 3a durch einen Stopfen 14 verschlossen, durch den sich mittig eine Zentrieröffnung 15 erstreckt. Die Zentrieröffnung 15 ist im wesentlichen zylindrisch und weist einen Durchmesser auf, der mindestens gleich bzw. etwas größer ist als der Außendurchmesser des zylindrischen Fußes 13a des Zentrierkörpers 13.

Das der Kette 2 abgewandte, freie Ende der rohrförmigen Wandung 3a des Tragarmes 3 wird durch einen weiteren Stopfen 16 verschlossen. In diesen weiteren Stopfen 16 ist eine zweite Öse 16a mittig eingeschraubt. In die Öse 16a des Stopfens 16 und die Öse 13b des Zentrierkörpers 13 sind die beiden Enden einer Zugfeder 17 eingehängt, die unter einer vorbestimmten Spannung steht, so daß der Tragarm 3 durch die Feder 17 mit einer vorbestimmten Kraft gegen die Sitzplatte 12 gezogen wird, wobei die einander zugewandten Stirnflächen des Stopfens 14 und der Sitzplatte 12 in dichten Flächenkontakt miteinander gezogen werden.

Die Vorspannung der Feder 17 wird so gewählt, daß die in Fig. 1 gezeichnete Stellung des Tragarmes 3, in der die Achse des Tragarmes 3 und die Achse des Adapterstiftes 8 miteinander fluchten, auf jeden Fall unter dem Eigengewicht des Tragarmes 3 plus dem Gewicht des aufgeschobenen Hohlkörpers plus den durch die Fördergeschwindigkeit eingetragenen Kräften plus den Belastungen durch das normale Aufstecken und Abziehen der Hohlkörper verbleibt.

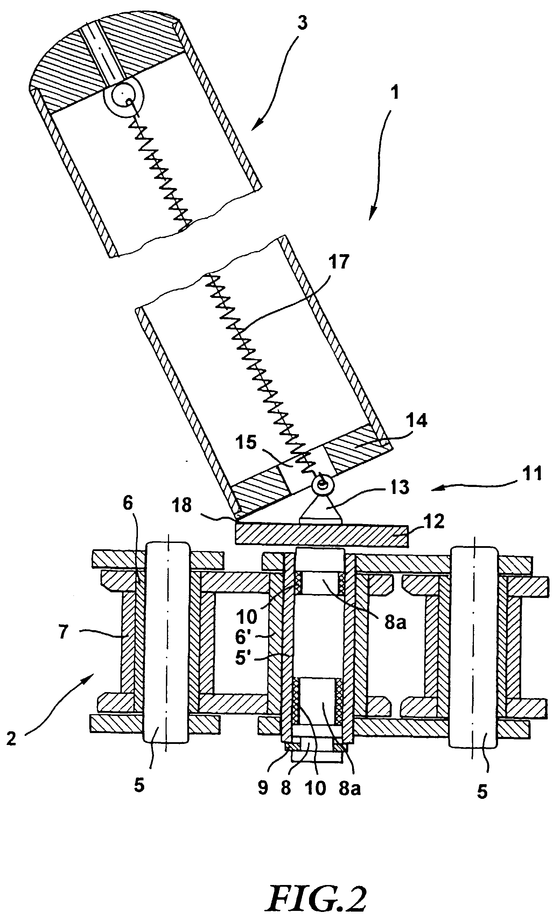

Erst wenn die auf den Tragarm 3 einwirkende Belastung, beispielsweise durch einen plötzlichen Stoß, in einer Weise überschritten wird, daß eine Beschädigung der Kette 2 zu befürchten ist, kann der Tragarm 3 durch Abkippen um das Kippgelenk 11 der Belastung ausweichen, wie dies in Fig. 2 ersichtlich ist. Beim Verkippen stützt sich ein der Belastung diametral gegenüberliegender Punkt am der Kette 2 zugewandten Ende des Tragarmes 3 auf der Sitzplatte 12 ab, wie dies anhand der Punktes 18 in Fig. 2 dargestellt wird (in der Mehrzahl der Fälle wird dieser Punkt unter der Wirkung der Feder 17 anschließend in Richtung Zentrierkörper 13 wandern. Dieser Punkt wirkt dann als Kippmittelpunkt für die Verkippbewegung des Tragarmes 3, wobei die Zentrieröffnung 15 vom Zentrierkegel 13 abgehoben wird und die Feder 17 weiter gespannt wird. Wie unschwer zu erkennen, kann sich der Kippmittelpunkt 18 an jedem Punkt entlang des gesamten Umfanges des Tragarmes 3 befinden, so daß der Tragarm 3 immer ausweichen kann, egal von welcher Richtung die übermäßige Belastung auf ihn einwirkt. Es ist weiterhin ersichtlich, daß der Tragarm 3 zumindest so weit ausweichen kann, daß sein freies Ende jeden Punkt auf einer Halbkugel erreicht, deren Basis in der Sitzplatte liegt. Hört die Belastung auf, so zieht die Feder 17 den Tragarm 3 wieder in seine feste Anlage an der Sitzplatte 12, wobei durch den in die Zentrieröffnung 15 eintauchenden Zentrierkörper 13 die axiale Ausrichtung zwischen dem Tragarm 3 und dem Adapterstift 8 wieder hergestellt wird.

In Abwandlung des beschriebenen und gezeichneten Ausführungsbeispiels kann das Kippgelenk auch in Verbindung mit anders gestalteten Tragarmen bzw. anderen Ketten eingesetzt werden. In kinematischer Umkehrung kann beispielsweise auch der Zentrierkörper am Tragarm und die Zentrieröffnung in der Sitzplatte vorgesehen werden, wobei dann die Feder zweckmäßigerweise im Inneren des Adapterstiftes untergebracht wird. Anstelle der beschriebenen Zugfeder können andere, geeignete Belastungsmittel, beispielsweise auf der Basis eines Reibwiderstandes oder dgl. eingesetzt werden. Wenn übermäßige Belastungen nur aus einer einzigen, feststehenden Richtung zu erwarten sind, kann anstelle des allseitig kippbaren Gelenks ein Kippgelenk mit einer festen Kippachse eingesetzt werden. Schließlich können Adapterstift, Sitzplatte und Zentrierkörper drehbar im Inneren des Hohlbolzens aufgenommen sein, um eine Selbstausrichtung beim Bewegen der Kette zu gestatten.

## Patentansprüche

1. Fördereinrichtung mit einer Förderkette und wenigstens einem Tragarm zum Aufstecken zu fördernder Gegenstände, wobei der Tragarm mit einem seiner Enden über eine Überlastsicherung mit der Förderkette verbunden ist, wobei die Überlastsicherung ein Kippgelenk (11) zwischen dem Tragarm (3) und der Förderkette (2) umfaßt, das bei einer vorbestimmten Belastung ein reversibles Verkippen des Tragarms (3) relativ zur Föderkette (2) gestattet,
**dadurch gekennzeichnet,**
daß das Kippgelenk durch eine Zugfeder (17) belastet ist.

2. Fördereinrichtung nach Anspruch 1,
**dadurch gekennzeichnet,**
daß das Kippgelenk (11) ein allseitiges Verschwenken des Tragarms (3) relativ zur Förderkette (2) gestattet.

3. Fördereinrichtung nach Anspruch 1 oder 2,
**dadurch gekennzeichnet,**
daß das Kippgelenk (11) einen an einer Umfangskante des der Förderkette (2) zugewandten Endes des Tragarms (3) liegenden Kippmittelpunkt (18) aufweist.

4. Fördereinrichtung nach einem der Ansprüche 1 bis 3,
**dadurch gekennzeichnet,**
daß das Kippgelenk (11) eine zwischen dem Tragarm (3) und der Förderkette (2) angeordnete Sitzplatte (12) zum Abstützen des Tragarms (3) beim Kippen aufweist.

5. Fördereinrichtung nach einem der Ansprüche 1 bis 4,
**dadurch gekennzeichnet,**
daß zwischen der Förderkette (2) und dem Tragarm (3) ein Zentriersitz mit einem Zentrierkörper (13) und einer Zentrieröffnung (15) vorgesehen ist.

6. Fördereinrichtung nach Anspruch 5,
**dadurch gekennzeichnet,**
daß der Zentrierkörper (13) als Kegel ausgebildet ist.

7. Fördereinrichtung nach einem der Ansprüche 1 bis 6,
**dadurch gekennzeichnet,**
daß die Zugfeder zwischen dem mit der Förderkette (2) verbundenen Zentrierkörper (13) und dem Tragarm (3) gespannt ist.

8. Fördereinrichtung nach einem der Ansprüche 1 bis 7,
**dadurch gekennzeichnet,**
daß der Zentrierkörper (13) eine an seiner Spitze befestigte Öse (13b) zum Anbringen der Zugfeder (17) aufweist.

9. Fördereinrichtung nach einem der Ansprüche 1 bis 8,
**dadurch gekennzeichnet,**
daß der Tragarm (3) als zylindrischer Hohlkörper mit einer rohrförmigen Wandung (3a) ausgebildet ist, die an dem der Sitzplatte (12) zugewandten Ende durch einen Stopfen (14) verschlossen ist, durch den sich mittig die Zentrieröffnung (15) erstreckt.

10. Fördereinrichtung nach einem der Ansprüche 1 bis 9,
**dadurch gekennzeichnet,**
daß das der Förderkette (2) abgewandte, freie Ende der rohrförmigen Wandung (3a) des Tragarms (3) durch einen Stopfen (16) verschlossen ist, der eine Öse zum Einhängen der Zugfeder (17) umfaßt.

11. Fördereinrichtung nach einem der Ansprüche 1 bis 10,
**dadurch gekennzeichnet,**
daß die beiden Enden der Zugfeder (17) in die Öse (16a) des Stopfens (16) und die Öse (13b) des Zentrierkörpers (13) eingehängt sind, wobei die Zugfeder (17) unter der vorbestimmten Belastung steht, so daß der Tragarm (3) durch die Zugfeder (17) mit einer vorbestimmten Kraft gegen die Sitzplatte (12) gezogen ist, und wobei die einander zugewandten Stirnflächen des Stopfens (14) und der Sitzplatte (12) in dichten Flächenkontakt miteinander gezogen sind.

12. Fördereinrichtung nach einem der Ansprüche 1 bis 11,
**dadurch gekennzeichnet,**
daß die Vorspannung der Zugfeder (17) so gewählt ist, daß der Tragarm (3) in der Stellung, in der die Achse des Tragarms (3) und die Achse des Adapterstiftes (8) miteinander fluchten, unter dem Eigengewicht des Tragarms (3) plus dem Gewicht eines aufschiebbaren Hohlkörpers plus den durch die Fördergeschwindigkeiten eingetragenen Kräften plus den Belastungen durch das normale Aufstecken und Abziehen der Hohlkörper, verbleibt.

13. Fördereinrichtung nach einem der Ansprüche 1 bis 12,
**dadurch gekennzeichnet,**
daß die Sitzplatte (12) scheibenförmig ausgebildet und einen mit dem Umfang des Tragarms (3) fluchtenden Umfang aufweist.

14. Fördereinrichtung nach einem der Ansprüche 1 bis 13,
**dadurch gekennzeichnet,**
daß der Tragarm (3) über einen Adapterstift (8) mit der Förderkette (2) verbunden ist.

15. Fördereinrichtung nach Anspruch 14,
**dadurch gekennzeichnet,**
daß der Adapterstift (8) sich durch die Förderkette (2) erstreckt und an dem dem Tragarm (3) gegenüberliegenden Ende mit einer Lagesicherung (9) versehen ist.

16. Fördereinrichtung nach Anspruch 14 oder 15,
**dadurch gekennzeichnet,**
daß der Adpaterstift (8) mit der Förderkette (2) über eine Dämpfungseinrichtung (10) verbunden ist.
